# EUROPÄISCHE PATENTSCHRIFT

(11) **EP 3 318 431 B1**
(45) Veröffentlichungstag und Bekanntmachung des Hinweises auf die Patenterteilung: **08.12.2021**
(21) Anmeldenummer: 17196036.2
(22) Anmeldetag: 11.10.2017
(51) Int. Cl.: B60G 17/017, B62D 53/00

(54) **ROUTENZUGANHÄNGER**
ROUTE TRAIN TRAILER
REMORQUE DE TRAIN DE REMORQUES

(30) Priorität: 04.11.2016 DE 102016121095
(43) Veröffentlichungstag der Anmeldung: 09.05.2018
(73) Patentinhaber: A&A Logistik-Equipment GmbH & Co. KG, 21258 Heidenau (DE)
(72) Erfinder: Haltermann, Anja, 21258 Heidenau (DE); Haltermann, Frank, 21258 Heidenau (DE)
(74) Vertreter: Holz, Christian

(56) Entgegenhaltungen:
- EP-A2- 0 890 463
- EP-A2- 2 311 673
- DE-A1- 10 221 417
- DE-A1-102014 003 460
- FR-A1- 2 930 926

## Beschreibung

Die vorliegende Erfindung betrifft einen Routenzuganhänger gemäß dem Oberbegriff des Patentanspruchs 1.

Das Gebiet der Intralogistik betrifft die Waren- und Materialflüsse innerhalb von Unternehmen. In der Produktion müssen Komponenten und Zwischenprodukte den Fertigungsschritten zugeführt und danach zur Weiterverarbeitung oder Verpackung abgeholt werden. Im Versand sind Lagerwaren für die Versendung zu kommissionieren. Hierfür werden bei größeren Transportmengen und -wegen sogenannte Routenzüge, Trailerzüge oder Logistikzüge eingesetzt, die aus einem Zugfahrzeug und im Allgemeinen drei bis vier Routenzugelementen oder Routenzuganhängern bestehen. Der Fahrer fährt mit seinem Zug die verschiedenen Stationen im Lager, in der Produktion, im Warenausgang etc. an, hält dort und ent- bzw. belädt die einzelnen Anhänger je nach Auftrag.

Um größere Warenmengen schneller und einfacher be- und entladen zu können, sind Routenzuganhänger bekannt, die mit z.B. Paletten oder Gitterboxen beladene Logistikelemente wie z.B. Rollwagen oder Rollgestelle, auch Trolley genannt, als Ganzes aufnehmen und transportieren können. Zur Aufnahme eines Logistikelements wird der Routenzuganhänger abgesenkt, das Logistikelement auf eine Aufnahme des Routenzuganhängers aufgeschoben und der Routenzuganhänger dann wieder angehoben, damit die Rollen des Logistikelements während der Fahrt mit den Routenzug den Untergrund nicht berühren, hierdurch geschont werden und dessen Fahreigenschaften nicht beeinflussen. Die Entnahme eines Logistikelements erfolgt in der umgekehrten Reihenfolge der o.g. Schritte.

Alleine aufgrund ihrer Gestell- bzw. Rahmenform sind verschiedene Arten von Routenzuganhängern bekannt. Sehr häufig werden Routenzuganhänger mit einem C-förmigen, senkrecht zur Fahrtrichtung einseitig offenem Gestell verwendet, in welches das Logistikelement seitlich von einer Seite eingeschoben und entnommen werden kann. Diese Routenzuganhänger weisen üblicherweise jeweils zwei Räder mit einer starren Achse an der vorderen und an der hinteren Kante des C-Rahmens in Fahrt- bzw. in Längsrichtung betrachtet auf. Das rein vertikale Anheben erfolgt üblicherweise durch das Anheben des C-Rahmens samt dem aufgenommenen Logistikelement gegenüber den beiden Räderpaaren bzw. gegenüber deren Achsen.

Auch sind Routenzuganhänger bekannt, die ein E-förmiges Gestell mit einer Gabel in der Mitte aufweisen. In diesem Fall kann das Logistikelement ebenfalls von einer Seite seitlich zwischen die vordere und hintere Kante des E-Rahmens, aber über dessen mittlere Gabel drüber, in den Rahmen eingeschoben werden. Die Gabel kann dann das aufgenommene Logistikelement von unten anheben. Die Gabel weist ein einziges Räderpaar auf, welches mit einer starren Achse verbunden ist. Das rein vertikale Anheben des E-Rahmens samt dem aufgenommenen Logistikelement erfolgt gegenüber dem Räderpaar bzw. gegenüber dessen Achse.

Ferner sind sog. Überladerahmen bekannt, welche, der zuvor beschriebenen Nomenklatur folgend, auch teilweise als B-Rahmen bezeichnet werden. Ein Überladerahmen weist ein Gestell mit einer in Längs- bzw. Fahrtrichtung mittig angeordneten Achse auf, an die sich in Längs- bzw. Fahrtrichtung davor und dahinter jeweils ein flacher Bereich anschließt, auf den ein Logistikelement von beiden Seiten aufgeschoben sowie entnommen werden kann. Die mittlere Achse ist ebenfalls starr und weist ein einziges Räderpaar auf. Das rein vertikale Anheben des mittleren Gestells sowie der flachen Bereiche samt dem aufgenommenen Logistikelement erfolgt gegenüber dem Räderpaar bzw. gegenüber dessen Achse.

Des Weiteren sind sog. Portalrahmen bekannt, welche nach unten und zu beiden Seiten hin offen sind. Es sind Ausführungen bekannt, bei denen die Verbindung einer mittleren Achse mit einem Räderpaar und der in Längs- bzw. Fahrtrichtung vorderen und hinteren Kante des Rahmens über dem Gestell über die Zwischenräume hinüber stattfindet, in welche jeweils ein Logistikelement von beiden Seiten eingeschoben und entnommen werden kann. Auch in diesem Fall weist die mittlere Achse ein einziges Räderpaar auf, welches mit einer starren Achse verbunden ist. Das rein vertikale Anheben des mittleren Gestells sowie der vorderen und hinteren Kante des Rahmens samt den beiden aufgenommenen Logistikelementen erfolgt gegenüber dem Räderpaar bzw. gegenüber dessen Achse.

Üblicher sind jedoch Portalrahmen, welche in Längs- bzw. Fahrtrichtung eine vordere und eine hintere Kante aufweisen, zwischen denen ein Logistikelement von beiden Seiten eingeschoben und entnommen werden kann. Die vordere und hintere Kante des Routenzuganhängers weisen jeweils zwei Laufrollen auf, welche sich um die eigene Hochachse drehen können. Auch sind Varianten bekannt, welche hinten eine starre durchgängige Achse mit zwei Rollen und vorne zwei Laufrollen aufweisen. In jedem Fall erfolgt das rein vertikale Absenken und Anheben des Rahmens gegenüber den Rollen bzw. Laufrollen.

Zur Realisierung dieser Hebefunktionen ist es bekannt, dass das Zugfahrzeug elektrische Energie oder einen hydraulischen oder pneumatischen Druck zur Verfügung stellt, die bzw. der über Leitungen bzw. Schläuche zu den einzelnen Routenzuganhängern geleitet wird. An den Routenzuganhängern wird dann der hydraulische oder pneumatische Druck für das Anheben des aufzunehmenden Logistikelements genutzt oder dieser Druck wird mittels elektrisch betriebener Pumpen vor Ort erzeugt. Die elektrische Energie kann aber auch für elektrische Antriebe verwendet werden, die das Anheben durchführen. Ferner sind rein mechanisch zu betätigende Hebefunktionen bekannt, bei denen ein Benutzer z.B. über einen Hebelmechanismus selbst tätig werden muss, um den Routenzuganhänger abzusenken und anzuheben.

Derartige Routenzuganhänger sowie korrespondierende Logistikelemente sind z.B. von den Firmen Still, Linde, Jungheinrich, Jung Hebetechnik, LR Intralogistik sowie A&A Logistik-Equipment bekannt.

Die EP 2 161 182 A2 beschreibt einen einachsigen Trailerzuganhänger mit einem einseitig geöffneten E-förmigen Rahmen mit einem mittleren Querträger. An dem mittleren Querträger sind zwei Führungsrollen auf einer starren Achse unabhängig voneinander drehbar angeordnet. Durch den E-förmigen Rahmen kann ein Innenwagen mitgeführt aufgenommen werden. Der Innenwagen weist sich selbsttätig ausrichtende Lenkrollen auf, so dass der Innenwagen ohne Zuhilfenahme eines Gabelstaplers oder eines sonstigen Hebezeugs seitlich in den Trailerzuganhänger ein- und aus diesem ausgefahren werden kann, um getrennt an einer Übergabestation be- und entladen zu werden während der Trailerzuganhänger im Zugverbund verbleiben kann. In der Transportlage des Innenwagens werden der Anhängerrahmen und, unter flächiger Auflage auf dem Rahmen, auch der Innenwagen durch, zwischen Rahmen und Starrachse wirkende, pneumatische Druckstempel rein vertikal so weit angehoben, dass die Lenkrollen des Innenwagens von der Fahrbahn freikommen. Die Betätigung der Druckstempel erfolgt über eine Versorgungsleitung, welche über die einzelnen Trailerzuganhänger eines Zugverbunds mit der Zugmaschine verbunden ist.

Um die Schlauchführung zwischen den einzelnen Trailerzuganhängern bzw. dem Zugfahrzeug der EP 2 161 182 A2 zu vermeiden, weist der Trailerzuganhänger der EP 2 311 673 B1 eine Pumpe auf, die über ein Getriebe an wenigstens eines der am Boden abrollenden Räder gekoppelt ist, so dass die Pumpe während der Fahrt einen hydraulischen Druck erzeugt, der gespeichert wird und für ein zukünftiges Anheben des Trailerzuganhängers zur Verfügung steht. Auf diese Weise kann diese Funktion für jeden Trailerzuganhänger autark genutzt werden, so dass keinerlei störenden Leitungen und Schläuche zwischen den einzelnen Anhängern bzw. zwischen Anhänger und Zugfahrzeug benötigt werden.

Sowohl bei der EP 2 161 182 A2 als auch bei der EP 2 311 673 B1 werden dabei der Innenwagen mit dem gesamten E-förmigen Rahmen, d.h. sowohl mit dessen mittigem Querträger als auch mit der in Fahrt- bzw. Zugrichtung vorderen und hinteren Querkanten, gegenüber der starren Achse rein vertikal angehoben. Im Gegensatz hierzu wird in der DE 10 2012 017 838 A1 eine im Bereich des mittleren Fahrgestellabschnitts angeordnete Hubvorrichtung eines E-förmigen Rahmens beschrieben, welche alleine im mittleren Fahrgestellabschnitt des E-förmigen Rahmens einen rein vertikalen Hubvorgang des Transporthilfsmittels, d.h. des Innenwagens, bewirkt, während weder auf den vorderen noch auf den hinteren Fahrgestellabschnitten das Gewicht des Transporthilfsmittels bzw. Teile desselben übertragen werden. Hierdurch wird eine Pendelbewegung des Fahrgestellrahmens gegenüber dem aufgenommenen Innenwagen ermöglicht, und umgekehrt, so dass eine Beweglichkeit eines mehrgliedrigen Routenzugverbundes bewirkt wird. Auf diese Weise kann der Routenzug bei der Fahrt über Unebenheiten eine insgesamt wellenförmige Ausgleichbewegung ausführen.

Auch die EP 2 808 234 A1 beschreibt einen Routenzuganhänger mit einem E-förmigen Rahmen mit einer Hubeinrichtung für einen Rollwagen, die den Routenzuganhänger zwischen einer abgesenkten Aufnahmeposition für den Rollwagen und einer angehobenen Transportposition für den Rollwagen verstellen kann. Hierzu wird der gesamte Rahmen des Routenzuganhängers oder ein den Rollwagen tragender Abschnitt des Routenzuganhängers rein vertikal abgesenkt oder angehoben. Der den Rollwagen tragende Abschnitt des Routenzuganhängers ist ein mittlerer Schenkel des E-förmigen Rahmens, welcher zwei Laufräder aufweist. Es ist eine mechanische Verriegelung vorgesehen, die den Rollwagen in der Transportposition auf dem Routenzuganhänger selbsttätig sichern kann.

Die DE 20 2015 104 465 U1 beschreibt einen Trailerzuganhänger mit einem höhenverstellbaren E-förmigen Tragrahmen mit einer rein vertikalen Hubeinrichtung. Die Hubeinrichtung besteht aus wenigstens einer verdrehbaren Exzenterscheibe, die sich an einer Nockenrolle abstützt. Der E-Rahmen weist an seinem mittigen Fahrwerk eine starre Radachse mit zwei Rädern auf. Das Fahrwerk weist eine Welle auf, an der an beiden Enden eine Exzenterscheibe befestigt ist, die sich bei der Drehung des Rohres relativ zu der Nockenrolle vertikal bewegt und dabei den Tragrahmen oder einen Teil von diesem über die Radachse anhebt.

Die DE 20 2013 102 199 U1 beschreibt einen Trailerzuganhänger mit einem lastenaufnehmenden, auf einem Fahrwerk geführten E-förmigen Tragrahmen. An dem Mittelträger des E-förmigen Tragrahmens, der von dem Längsträger parallel zu den beiden Querträgern absteht, ist eine Greifereinheit angeordnet, die zwischen dem Längsträger und der gegenüberliegenden Ladeöffnung in Querrichtung verfahrbar ist und dabei die aufzunehmende bzw. abzugebende Last wie z.B. einen Trolley erfassen kann. Die Greifereinheit besteht aus einer endlos umlaufenden Kette, von der Mitnehmerfinger abstehen, welche die aufzunehmende bzw. abzugebende Last erfassen können. Die Greifereinheit ist an einem Sattel angebracht, der auf dem Mittelträger aufgesetzt und an diesem befestigt ist. Unter dem Mittelträger ist ein Fahrwerk mit zwei seitlich auf einer Achse gelagerten Rädern und einer rein vertikalen Hubeinrichtung angeordnet, die einen zwischen Achse und Mittelträger abgestützten Hydraulikzylinder aufweist.

Die DE 20 2014 101 510 U1 beschreibt einen Trailerzuganhänger mit einem B-förmigen Traggestell, d.h. mit einem Überladerahmen. Die DE 20 2014 101 510 U1 knüpft an die DE 20 2013 102 199 U1 an und weist ebenfalls eine Greifereinheit mit einer endlos umlaufenden Kette auf. Jedoch weist das Traggestell der DE 20 2014 101 510 U1 zwei segmentbogenförmige Auffahrt- und Ablauframpen auf, welche in der Fahrt- bzw. Zugrichtung vor und hinter dem mittig angeordneten Fahrwerk des Traggestells angeordnet sind. Die endlos geschlossenen Ketten weisen einen trapezförmigen Verlauf auf, der derart der Segmentbogenform der Auffahrt- und Ablauframpen entspricht, dass die Greifereinheit einen Trolley auf die Auffahrt- und Ablauframpen ziehen kann, ohne das Gewicht des Trolleys aufnehmen zu müssen. Dabei kann das Traggestell samt der beiden Auffahrt- und Ablauframpen mittels einer Hubeinrichtung, die zwischen dem Traggestell und der Achse des mittig angeordneten Fahrwerks angeordnet ist, rein vertikal angehoben und abgesenkt werden. Die starre Achse des mittig angeordneten Fahrwerks ist quer zur Fahrtrichtung angeordnet und weist an beiden Enden jeweils ein Rad auf.

Die EP 2 818 389 A1 beschreibt einen Portalanhänger für einen Routenzug. Der mittlere Anhängerabschnitt weist ein Paar von Rollen auf, die an einer Drehachse senkrecht zur Anhängerlängsrichtung vorgesehen sind. Die Rollen sind starr an dem mittleren Anhängerabschnitt angeordnet und besitzen miteinander fluchtende Drehachsen. Der mittlere Anhängerabschnitt ist mit einer Hubeinrichtung ausgestattet, die es erlaubt, den mittleren Anhängerabschnitt und über die portalförmigen Bögen auch den vorderen und hinteren Anhängerabschnitt rein vertikal anzuheben.

Nachteilig ist bei den meisten zuvor beschriebenen Routenzuganhängern, dass gar keine Entnahmeunterstützung vorhanden ist, um einem Benutzer das Entnehmen eines Logistikelements wie z.B. eines Trolleys oder dergleichen zu erleichtern. Da ein beladener Trolley bei einigen Anwendungsfällen ein Gewicht von bis zu 1 t aufweisen kann, muss der Benutzer eine nicht unerhebliche Kraft aufwenden, um einen Trolley aus einem Routenzuganhänger zu entnehmen. Dies kann im Laufe eines Arbeitstages zur Ermüdung führen. Auf die Dauer kann dies auch gesundheitsschädlich z.B. für den Rücken und bzw. oder die Gelenke des Benutzers sein. Auch kann die Erschöpfung eines Benutzers aufgrund von sinkender Konzentrationsfähigkeit zu Unfällen führen.

Hierbei ist zu beachten, dass das Beladen eines Routenzugelements mit z.B. einem Trolley aus einer Bewegung heraus erfolgt, d.h. der Trolley bereits in die Bewegung beschleunigt wurde. Das Entladen eines Trolleys aus einem Routenzugelements erfolgt jedoch aus dem Stillstand des Trolleys heraus, so dass die Masse des Trolleys durch den Benutzer zum einen beschleunigt werden muss und zum anderen die üblicherweise verwendeten Laufrollen im Stillstand in die Richtung der Entnahme gedreht werden müssen. Dies kann zu einem nicht unerheblichen Aufwand für den Benutzer führen.

Falls doch wie z.B. bei dem Trailerzuganhänger mit einem B-förmigen Traggestell der DE 20 2014 101 510 U1 eine kettengetriebene Greifereinheit als Aufnahme- und Entnahmehilfe vorhanden ist, bedeutet dies jedoch einen nicht unerheblichen zusätzlichen Aufwand sowohl bei der Herstellung des Trailerzuganhängers als auch bei dessen Betrieb durch Wartung und Verschleiß der beweglichen Teile. Ferner wird zusätzliche Energie benötigt, um die kettengetriebene Greifereinheit betreiben zu können. All dies kann zu zusätzlichen Kosten in der Anschaffung sowie im Betrieb führen. Auch können zusätzliche Bedienschritte des Benutzers erforderlich sein, um die kettengetriebene Greifereinheit ein- und auszuschalten. Hierzu gehört es für den Benutzer auch, die Greifereinheit rechtzeitig beim Beladen auszuschalten, damit die Greifereinheit den Trolley nicht über den Überladerahmen hinaus auf der gegenüberliegenden Seite des Trailerzuganhängers wieder ablädt.

Die DE 10 2014 003 460 A1 beschreibt ein Fördermittel, insbesondere einen Routenzuganhänger, mit einem Rahmen, einem Antrieb, der an dem Rahmen befestigt ist, und einem Rad, welches mit dem Antrieb verbunden und vorzugsweise in Fahrtrichtung des Fördermittels mittig angeordnet ist, wobei der Antrieb eine Höhenverstellung des Rahmens gegenüber dem Rad durchführen kann. Das Fördermittel ist dadurch gekennzeichnet, dass der Antrieb ein elektrischer Motor mit Gleitkeilgetriebe oder ein Torque-Motor ist.

Die EP 0 890 463 A2 beschreibt ein Fahrzeug, bei welches zwischen dem Fahrzeugaufbau und den Achsen angeordnete Luftfederbälge besitzt, über welche der Fahrzeugaufbau an den Achsen abgestützt ist, so dass auf Anforderung die Höhenlage des Fahrzeugaufbaues durch Ablassen von Druckluft aus den Luftfederbälgen und durch Einsteuern von Druckluft in die Luftfederbälge verändert werden kann. Um zu verhindern, daß beim Ändern der Höhenlage, insbesondere beim einseitigen Absenken des Fahrzeugaufbaues, der Fahrzeugaufbau hart auf ein Hindernis aufsetzt, wird beim Erkennen eines Hindernisses das Ändern der Höhenlage des Fahrzeugaufbaues selbsttätig beendet. Vorteilhafterweise schließt an das selbsttätige vorzeitige Beenden des Änderns der Höhenlage des Fahrzeugaufbaues in der einen Richtung ein selbsttätiges Ändern der Höhenlage des Fahrzeugaufbaues in der anderen Änderungsrichtung an, welches dann beendet wird, wenn das Hindernis nicht mehr erkannt wird.

Eine Aufgabe der vorliegenden Erfindung ist es, einen Routenzuganhänger der eingangs beschriebenen Art bereit zu stellen, so dass das Be- und Entladen eines Routenzuganhängers mit einem Logistikelement wie z.B. einem Trolley für den Benutzer erleichtert werden kann. Dies gilt insbesondere für das Entladen eines Routenzuganhängers. Zumindest soll eine Alternative zu bekannten Lösungen bereitgestellt werden.

Die Aufgabe wird erfindungsgemäß durch die Merkmale des kennzeichnenden Teils des Patentanspruchs 1 gelöst. Vorteilhafte Weiterbildungen sind in den Unteransprüchen beschrieben.

Somit betrifft die vorliegende Erfindung einen Routenzuganhänger mit einem Rahmen zur Aufnahme eines Logistikelements wie z.B. einem Trolley. Der Routenzuganhänger kann einen C-Rahmen oder einen E-Rahmen aufweisen und lediglich von einer Seite zu be- und entladen sein. Der Routenzuganhänger kann aber auch ein B-Rahmen bzw. ein Überladerahmen oder ein Portalrahmen und von beiden Seiten zu be- und entladen sein.

Der Routenzuganhänger ist dadurch gekennzeichnet, dass der Rahmen ausgebildet ist, auf wenigstens einer Seite in der vertikalen Richtung unabhängig von der in Querrichtung gegenüberliegenden Seite abgesenkt und angehoben zu werden. Unter einer Seite ist entweder die rechte oder die linke Seite des Routenzuganhängers in der Querrichtung gemeint. Auf diese Weise ist es erfindungsgemäß möglich, einen mit einem Logistikelement beladenen Routenzuganhänger nicht vollständig, d.h. mit seiner gesamten Fläche, sondern lediglich einseitig abzusenken. Auf diese Weise kann innerhalb des Routenzuganhängers eine schiefe Ebene geschaffen werden, von der das Logistikelement einfacher selbsttätig oder zumindest mit weniger Kraftaufwand eines Benutzers herunterrollen bzw. heruntergerollt werden kann als von einer horizontalen Ebene eines vollständig abgesenkten Routenzuganhängers. Dies kann den Benutzer bei der Entladung des Routenzuganhängers, insbesondere über die Dauer eines Arbeitstages zur Bedienung eines Routenzuges mit drei bis vier Routenzuganhängern, signifikant entlasten. Dies kann einer Erschöpfung sowie gesundheitlichen Problemen des Benutzers vorbeugen.

Vorzugsweise ist der Rahmen ferner ausgebildet, dass die zweite Seite ebenfalls abgesenkt werden kann und beide Seiten gleichzeitig angehoben werden können, so dass ein Logistikelement wie bisher bekannt in einen horizontal ausgerichteten und vollständig abgesenkten Routenzuganhänger ebenerdig eingeschoben und dann horizontal ausgerichtet angehoben werden kann. Dies kann für das Beladen deutlich einfacher für den Benutzer sein als ein Logistikelement eine schiefe Ebene hinaufschieben zu müssen.

Gemäß einem Aspekt der vorliegenden Erfindung weist der Routenzuganhänger wenigstens ein erstes Rad auf, welches auf einer Seite angeordnet und ausgebildet ist, in der vertikalen Richtung unabhängig von einem auf der in Querrichtung gegenüberliegenden Seite angeordnetem zweiten Rad abgesenkt und angehoben zu werden. Auf diese Weise kann wenigstens das erste Rad des Routenzuganhängers zwei Funktionen aufweisen, so dass auf zusätzliche Bauteile und Mittel verzichtet werden kann, um die Funktion des einseitigen Absenkens und Anhebens umzusetzen. Somit kann das Rad sowohl für die Bewegung als auch zum Absenken und Anheben verwendet werden. Dies kann die Umsetzung der erfindungsgemäßen zusätzlichen Funktion vereinfachen. Insbesondere können Kosten und auch Bauraum für die zusätzliche Funktion des einseitigen Absenkens und Anhebens vermieden werden.

Gemäß eines weiteren Aspekts der vorliegenden Erfindung ist ferner wenigstens das zweite Rad ausgebildet, in der vertikalen Richtung unabhängig von dem ersten Rad abgesenkt und angehoben zu werden. Die beiden Räder können somit gleichzeitig und gemeinsam angehoben und abgesenkt werden. Auch können beide Räder einzeln angehoben und abgesenkt werden. Dies kann in der gleichen Richtung, d.h. beide Räder werden z.B. angehoben bzw. ausgefahren, oder es können die beiden Räder auch in entgegengesetzter Richtung betätigt werden, d.h. ein Rad wird angehoben bzw. ausgefahren und das andere Rad wird abgesenkt bzw. eingefahren. Dies kann jeweils für beide Räder mit derselben Geschwindigkeit oder mit unterschiedlichen Geschwindigkeiten geschehen. Auf diese Weise kann die erfindungsgemäße Funktion des einseitigen Absenkens und Anhebens für beide Seiten des Routenzuganhängers umgesetzt werden, welcher in diesem Fall vorzugsweise ein B-Rahmen bzw. Überladerahmen oder ein Portalrahmen sein kann, um von beiden Seiten be- und entladen werden zu können. Dabei können auch beide Räder gleichzeitig abgesenkt oder angehoben werden, um alternativ den Routenzug auch horizontal ausgerichtet absenken und insbesondere anheben zu können.

Gemäß einem weiteren Aspekt der vorliegenden Erfindung weisen die beiden Räder eine gemeinsame Achse oder zwei unabhängige Achsen auf. Die beiden Räder des Routenzuges an einer gemeinsamen durchgängigen Achse anzuordnen kann die Konstruktion einfacher und günstiger gestalten und auch für eine stabile Verbindung der Räder untereinander sorgen. In diesem Fall kann das Absenken eines der beiden Räder durch einen Hubmechanismus erfolgen, welcher den Rahmen des Routenzuganhängers einseitig gegenüber den Rädern bzw. dessen gemeinsamer Achse absenken und anheben kann.

Vorzugsweise weist jedes Rad jedoch seine eigene Achse auf, so dass die beiden Seiten des Routenzuganhängers vollkommen unabhängig voneinander abgesenkt und angehoben werden können. Dies kann durch ein jeweiliges Ein- und Ausfahren der Räder gegenüber dem Rahmen des Routenzuganhängers erfolgen.

Gemäß einem weiteren Aspekt der vorliegenden Erfindung kann wenigstens das erste Rad, vorzugsweise ferner das zweite Rad, (jeweils) mittels eines Exzenters und eines Antriebs, vorzugsweise (jeweils) mittels eines elektrischen Antriebs, einzeln abgesenkt und angehoben werden. Hierdurch kann ein identischer und damit kostengünstigerer Aufbau beider Räder realisiert werden. Ferner kann die jeweilige Hubbewegung einfach, robust und verlässlich umgesetzt werden. Dabei weist der Antrieb vorzugsweise einen Motor, insbesondere einen elektrischen Motor, und ein Untersetzungsgetriebe auf, so dass durch den Motor eine Drehbewegung erzeugt werden kann, welche mittels des Exzenters in eine translatorische vertikale Bewegung des Absenkens und Anhebens des jeweiligen Rades umgesetzt werden kann. Vorzugsweise dreht der Exzenter dabei über 90° hinaus, so dass der erforderliche Hub für eine Bodenfreiheit des Routenzuganhängers von ca. 6 cm erreicht werden kann.

Werden beide Antriebe gleichzeitig und auf diese gleiche Art und Weise betrieben, so kann ein Absenken und Anheben eines horizontal ausgerichteten Rahmens des Routenzuganhängers erfolgen.

Als Antrieb einen elektrischen Antrieb zu verwenden kann vorteilhaft sein, da elektrische Energie zwischen den einzelnen Routenzuganhängern und dem Zugfahrzeug über ein elektrisches Kabel einfacher, sauberer und platzsparender zu übertragen sein kann als ein pneumatischer oder hydraulischer Druck.

Gemäß einem weiteren Aspekt der vorliegenden Erfindung ist der Rahmen ausgebildet, zuerst eine Seite in der vertikalen Richtung abzusenken und danach, um einen vorbestimmten Zeitabstand versetzt, selbsttätig die in Querrichtung gegenüberliegende Seite abzusenken. Auf diese Weise kann die erfindungsgemäße schiefe Ebene des Rahmens des Routenzuganhängers für die Entladung zur Verfügung gestellt werden. Ist das Entladen jedoch erfindungsgemäß erfolgt, kann ein zeitversetztes vollständiges Absenken des Rahmens des Routenzuganhängers dafür sorgen, dass ein horizontal ausgerichteter und ebenerdig auf den Untergrund abgesenkter Rahmen zur Verfügung steht, der wieder mittels eines Logistikelement wie bisher bekannt beladen werden kann.

Gemäß einem weiteren Aspekt der vorliegenden Erfindung ist der Rahmen ausgebildet, beide Seiten in der vertikalen Richtung gleichzeitig oder zeitlich versetzt derart abzusenken, so dass beide Seiten gegenüber einer vorherigen Höhe abgesenkt werden, eine Seite jedoch stärker abgesenkt wird als die in Querrichtung gegenüberliegende Seite. Auf diese Weise ist es möglich, eine schiefe Ebene bereitzustellen, um das Logistikelement wie bereits zuvor beschriebenen einfacher entladen zu können, gleichzeitig jedoch durch das Absenken der in Querrichtung gegenüberliegenden Seite insgesamt die Höhe des Rahmens zu verringern und hierdurch die Neigung der schiefen Ebene vorzugeben. Hierdurch kann erreicht werden, dass eine schiefe Ebene eingenommen wird, von der sich das Logistikelement einfacher als von einer horizontal ausgerichteten ebenerdig abgesenkten Ebene entnehmen lässt, die Neigung der schiefen Ebene jedoch ausreichend gering ist um zu verhindern, dass das Logistikelement mit zu viel Schwung dem Benutzer entgegenkommt, so dass der Benutzer das Logistikelement mit zu großem Aufwand abfangen und wieder abbremsen müsste. Mit anderen Worten kann eine Neigung des Rahmens eingenommen werden, welche der Masse des Logistikelements genau derart entspricht, dass das Entnehmen des Logistikelements für den Benutzer erleichtert wird, ohne das Logistikelement dabei zu sehr zu beschleunigen.

Hierzu kann der Rahmen entweder zuerst durch z.B. beide Räder gleichzeitig um eine gewisse Höhe abgesenkt werden, bevor das Rad der Seite, zu der die Neigung des Rahmens erzeugt werden soll, vollständig auf den Untergrund abgesenkt wird. Die Bewegung dieses Rades kann vorzugsweise durchgängig erfolgen, was den Ablauf des Absenkens flüssiger und schneller gestalten kann. Alternativ können auch beide Räder gleichzeitig aber mit unterschiedlichen Geschwindigkeiten abgesenkt werden, so dass das Rad der Seite, zu der die Neigung des Rahmens erzeugt werden soll, schneller abgesenkt wird als das Rad der gegenüberliegenden Seite. Hierdurch kann erreicht werden, dass die Beschleunigung des Logistikelements zur Seite der Neigung hin bereits während des Absenkens beginnen kann und somit der gesamte Entnahmevorgang für den Benutzer beschleunigt werden kann.

Gemäß einem weiteren Aspekt der vorliegenden Erfindung weist der Routenzuganhänger wenigstens ein Absenkbedienelement, vorzugsweise jeweils wenigstens ein Absenkbedienelement für jede Seite, auf, welches ausgebildet ist, bei Betätigung durch einen Benutzer ein Absenken einer Seite des Rahmens, vorzugsweise ein Absenken der dem Benutzer zugewandten Seite des Rahmens, auszulösen. Auf diese Weise kann ein erfindungsgemäßes einseitiges Absenken des Rahmens des Routenzuganhängers genau dann erfolgen, wenn der Benutzer dies wünscht, so dass sich der Benutzer zuvor auf der entsprechenden Seite des Rahmens aufstellen kann, um das von der schiefen Ebene des Rahmens herunterrollende Logistikelement in Empfang zu nehmen, d.h. zu halten und zu führen. Hierdurch kann ein unkontrolliertes und ungewolltes Absenken und Entladen des Routenzuganhängers vermieden werden. Auch kann ein Routenzuganhänger eines Routenzuges gezielt zur Entladung ausgewählt und betätigt werden.

Vorzugsweise ist das Absenkbedienelement ausgebildet, verschiedene Arten des Absenkens zu veranlassen. Beispielsweise kann durch das einmalige Betätigen des Absenkbedienelements ein Absenken lediglich der entsprechenden Seite des Rahmens ausgelöst werden. Zusätzlich kann die Möglichkeit bestehen, dass durch das zweimalige Betätigen des Absenkbedienelements innerhalb eines kurzen Zeitraums eine zweite Art des Absenkens durch den Benutzer gewählt und durch das Absenkbedienelement ausgelöst werden kann. Diese zweite Art des Absenkens kann beispielsweise, wie zuvor bereits beschrieben, ein Absenken beider Seiten des Rahmens auf eine gewisse Höhe sowie ein vollständiges Absenken der entsprechenden Seite des Rahmens sein, so dass auch mittels des zweimaligen Betätigen des Absenkbedienelements eine schiefe Ebene zum Benutzer hin eingenommen werden kann, jedoch mit einer geringeren Neigung als bei der einmaligen Betätigung des Absenkbedienelements. Auf diese Weise kann z.B. für ein leichteres Logistikelement durch den Benutzer eine größere Neigung gewählt werden und für ein schwereres Logistikelement eine geringere Neigung, um das Logistikelement durch die schiefe Ebene je nach Gewicht ausreichend zu beschleunigen, jedoch nicht zu stark zu beschleunigen, um das Gewicht sicher entgegennehmen und führen zu können.

Gemäß einem weiteren Aspekt der vorliegenden Erfindung ist das Absenkbedienelement ein Taster, insbesondere ein Fußtaster. Auf diese Weise kann ein Benutzer das Absenkbedienelement betätigen und ein einseitiges Absenken des Routenzuganhängers auslösen, ohne sich hierfür z.B. bücken oder in die Knie gehen zu müssen. Dies könnte den Benutzer davon abhalten, das von der schiefen Ebene des Rahmens herunterrollende Logistikelement in Empfang nehmen, halten und führen zu können. Ferner könnte es auf die Dauer für den Benutzer anstrengend und belastend sein, sich für jede Entladung eines Routenzuganhängers bücken oder in die Knie gehen zu müssen. Dies kann dadurch vermieden werden, indem die Betätigung des Absenkbedienelements mittels des Fußes vorgenommen werden kann, so dass der Benutzer gleichzeitig aufrecht stehen und die Hände bereits am Logistikelement haben kann.

Gemäß einem weiteren Aspekt der vorliegenden Erfindung ist der Rahmen, insbesondere als Überladerahmen oder als Portalrahmen, ausgebildet, von beiden Seiten in Querrichtung be- und entladen zu werden. Dies kann eine höhere Flexibilität beim Einsatz des Routenzuganhängers ermöglichen, weil die Stationen, an welchen der Routenzuganhänger ent- und beladen werden kann, mit beiden Seiten des Rahmens angefahren werden können. Hierdurch kann z.B. der Zeitaufwand eines Wendens des Routenzuges eingespart werden.

Gemäß einem weiteren Aspekt der vorliegenden Erfindung weist der Rahmen zueinander in Längsrichtung beabstandet eine erste Logistikelementaufnahme und eine zweite Logistikelementaufnahme auf, welche ausgebildet sind, jeweils wenigstens eine Rolle des Logistikelements aufzunehmen. Die Logistikelementaufnahme sind vorzugsweise jeweils als Senken ausgebildet, welche möglichst flach und gegenüber dem übrigen Rahmen tiefer ausgebildet sind, so dass ein Logistikelement wie z.B. ein Trolley mit seinen vorderen und hinteren Laufrollen seitlich in die beiden Logistikelementaufnahmen eingeschoben und heruntergerollt werden kann.

Gemäß einem weiteren Aspekt der vorliegenden Erfindung weist wenigstens eine Logistikelementaufnahme, vorzugsweise weisen beide Logistikelementaufnahmen, ein Paar von Schrägflächen auf, welches sich im Wesentlichen in der Querrichtung erstreckt und in der vertikalen Richtung dreieckig erhöht ausgebildet ist. Auf diese Weise kann eine Rampe innerhalb der Logistikelementaufnahme ausgebildet werden, welche ein Einschieben des Logistikelements durch einen Benutzer dahingehend erleichtern kann, dass die vordere Laufrolle des Logistikelements bei Einschieben zwar die Schrägfläche hochgeschoben werden muss, jedoch nach Überschreiten des Kontaktpunktes der beiden Schrägflächen, d.h. des Scheitelpunktes der Logistikelementaufnahme, auf der zweiten Schrägfläche ein Abwärtsrollen ausführt, dessen Kraft das Einschieben der hinteren Laufrolle für den Benutzer erleichtern kann. Hierdurch kann zumindest der zweite Abschnitt des Einschiebens für den Benutzer einfacher, d.h. mit weniger Kraft auszuüben, sein.

Gemäß einem weiteren Aspekt der vorliegenden Erfindung weist wenigstens ein Paar von Schrägflächen, vorzugsweise weisen beide Paare von Schrägflächen, je Schrägfläche gegenüber der Querrichtung eine Steigung von einem Winkel α auf, der zwischen ca. 1° und ca. 5°, vorzugsweise zwischen ca. 2° und ca. 4°, besonders bevorzugt ca. 3°, beträgt. Auf diese Weise kann ein möglichst flacher Aufbau der Logistikelementaufnahme bei gleichzeitig zuvor beschriebener Wirkung erreicht werden. Dies kann insbesondere bei einem Winkel α von ca. 3° der Fall sein.

Gemäß einem weiteren Aspekt der vorliegenden Erfindung erstrecken sich wenigstens die Schrägflächen wenigstens eines Paares von Schrägflächen, vorzugsweise die Schrägflächen beider Paare von Schrägflächen, in der Querrichtung in der halben Breite der Logistikelementaufnahme. Auf diese Weise liegt der Höhepunkt des jeweiligen Schrägflächenpaares in der Querrichtung mittig und die beiden Schrägflächen sind vorzugsweise mit derselben Steigung versehen. Auf diese Weise können die zuvor beschriebenen Eigenschaften und Vorteile bei Beladen des Routenzuganhängers mit einem Logistikelement von beiden Seiten gleichermaßen genutzt werden.

Gemäß einem weiteren Aspekt der vorliegenden Erfindung erstrecken sich die einzelnen Schrägflächen wenigstens eines Paares von Schrägflächen, vorzugsweise beider Paare von Schrägflächen, in der Querrichtung etwa 1 cm bis 5 cm kürzer als der Achsabstand zweier in der Querrichtung beabstandeter Laufrollen des Logistikelements beträgt. Mit anderen Worten ist der Radstand der Laufrollen des Logistikelements etwa 1 cm bis 5 cm länger als die halbe Breite des Rahmens des Routenzuganhängers im Bereich der Logistikelementaufnahme bzw. der Logistikelementaufnahmen. Auf diese Weise kann der zuvor beschriebene Effekt des Hinunterrollens der vorderen Laufrollen zum Hochziehen der hinteren Laufrolle auf ein Paar von Schrägflächen sicher erreicht werden.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen Routenzuganhängers ohne Abdeckung;
- Fig. 2: die Darstellung der Fig. 1 mit Abdeckung;
- Fig. 3: eine schematische Darstellung des erfindungsgemäßen Routenzuganhängers von der rechten Seite;
- Fig. 4: eine schematische Darstellung des erfindungsgemäßen Routenzuganhängers in Fahrtrichtung von hinten in einem vollständig angehobenen Zustand;
- Fig. 5: die Darstellung der Fig. 4 in einem einseitig abgesenkten Zustand;
- Fig. 6: die Darstellung der Fig. 4 in einem beidseitig abgesenkten Zustand;
- Fig. 7: die Darstellung der Fig. 6 mit einem teilweise eingeschobenen Logistikelement; und
- Fig. 8: die Darstellung der Fig. 7 mit einem weiter eingeschobenen Logistikelement.

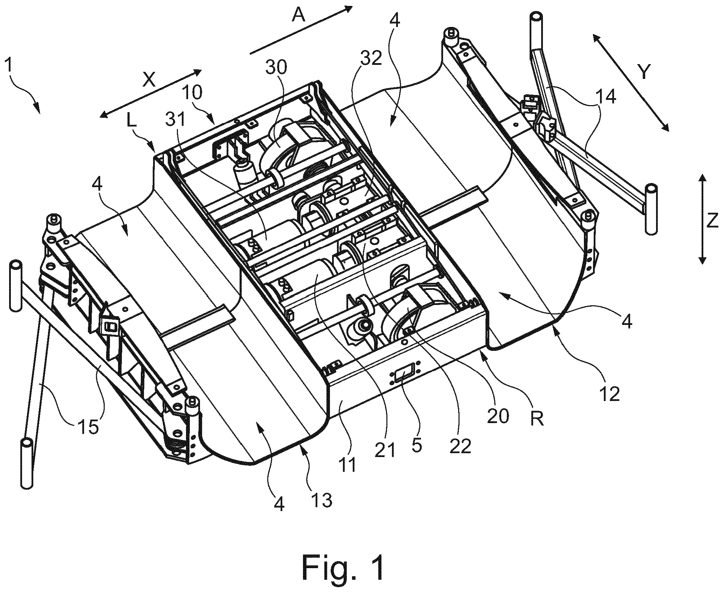

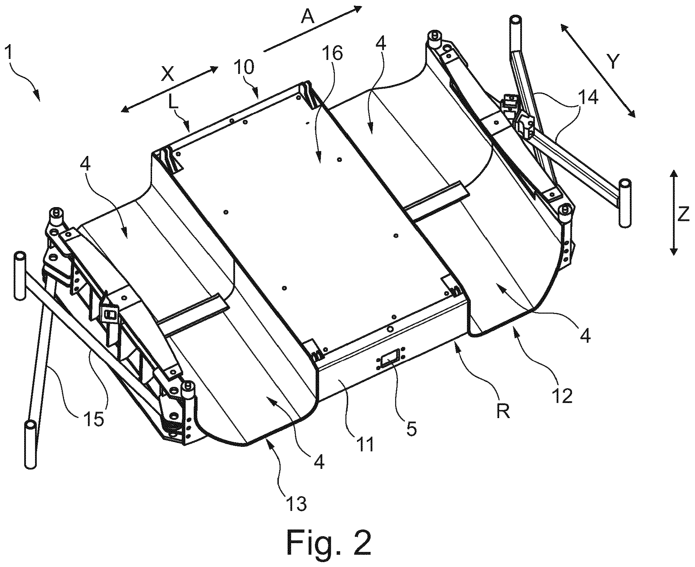

Fig. 1 zeigt eine perspektivische schematische Darstellung eines erfindungsgemäßen Routenzuganhängers 1 ohne Abdeckung 16. Fig. 2 zeigt die Darstellung der Fig. 1 mit Abdeckung 16. Der Routenzuganhänger 1 erstreckt sich im Wesentlichen in einer Längsrichtung X, in welcher auch die Bewegungsrichtung A oder auch Fahrtrichtung A des Routenzuganhängers 1 zeigt. Senkrecht zur Längsrichtung X erstreckt sich der Routenzuganhänger 1 in einer Querrichtung Y. Senkrecht zur Längsrichtung X und zur Querrichtung Y erstreckt sich der Routenzuganhänger 1 in einer vertikalen Richtung Z, welche auch als Höhe Z bezeichnet werden kann. In Fahrtrichtung A betrachtet weist der Routenzuganhänger 1 eine rechte Seite R und eine linke Seite Lauf.

Der Routenzuganhänger 1 weist einen Rahmen 10 auf, welcher als B-Rahmen bzw. Überladerahmen ausgebildet ist und auch als Gestell 10 bezeichnet werden kann. Hierzu weist der Rahmen 10 einen mittleren Rahmenteil 11 auf, an dem sich in der Längsrichtung X bzw. Fahrtrichtung A davor eine erste, vordere Logistikelementaufnahme 12 und dahinter eine zweite, hintere Logistikelementaufnahme 13 aufweist. Jeweils vor und hinter den Logistikelementaufnahmen 12, 13 weist der Rahmen 10 ein erstes, vorderes Kopplungselement 14 in Form einer ersten, vorderen Scherenkopplung 14 und ein zweites, hinteres Kopplungselement 15 in Form einer zweiten, hinteren Scherenkopplung 15 auf. Die beiden Scherenkopplungen 14, 15 sind ausgebildet, den Routenzuganhänger 1 mit einem weiteren derartigen oder anderen Routenzuganhänger bzw. mit einem Zugfahrzeug eines Routenzuges mit einem möglichst geringen Abstand zwischen den Fahrzeugen zu verbinden.

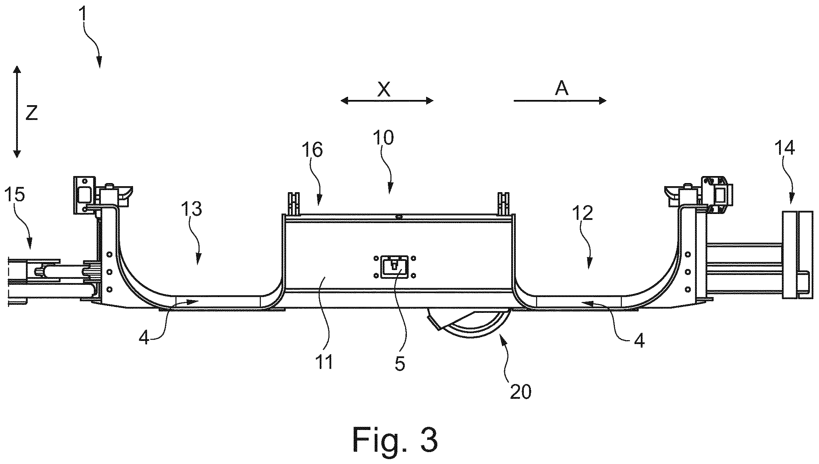

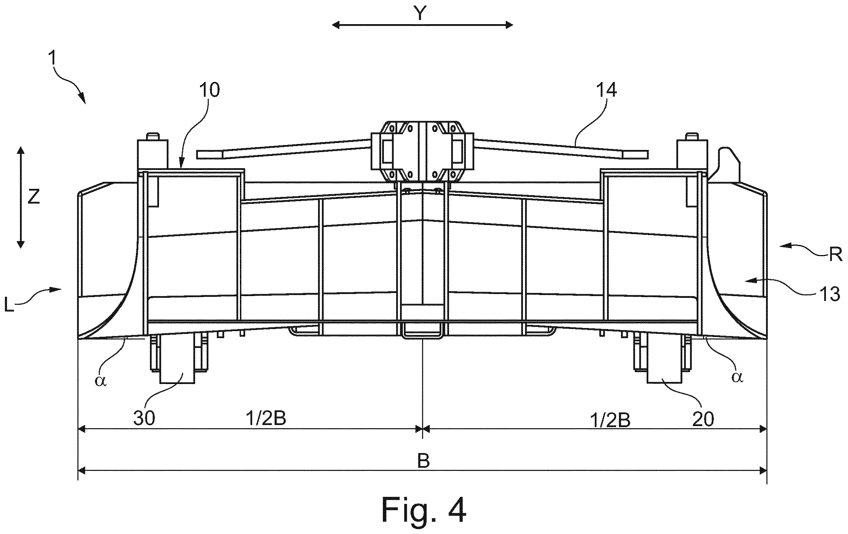

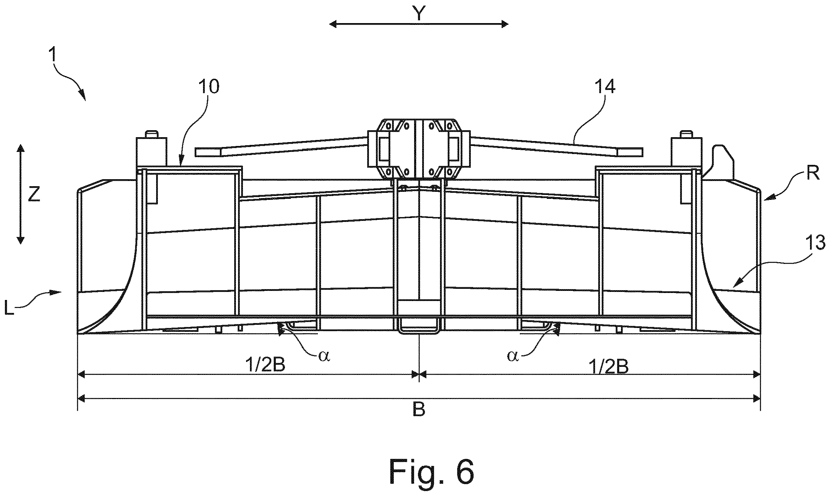

Der mittlere Rahmenteil 11 weist zwei Räder 20, 30 auf, auf denen der Routenzuganhänger 1 rollend von einem Zugfahrzeug bewegt werden kann. Der mittlere Rahmenteil 11 und damit auch der gesamte Rahmen 10 kann gegenüber den beiden Rädern 20, 30 angehoben und abgesenkt werden, um in einer abgesenkten Position, vgl. z.B. Fig. 6 bis 8, ein Logistikelement 6 wie z.B. einen Trolley 6 auf die beiden Logistikelementaufnahmen 12, 13 hinaufschieben zu können. In einer angehobenen Position, vgl. z.B. Fig. 1 bis 4, weist der Rahmen 10 einen Abstand gegenüber dem Untergrund auf und kann rollend gezogen werden, um z.B. das aufgenommene Logistikelement 6 zu transportieren. Zum Anheben des Rahmens 10 werden die beiden Räder 20, 30 aus dem mittleren Rahmenteil 11 ausgefahren und zum Absenken des Rahmens 10 werden die beiden Räder 20, 30 in den mittleren Rahmenteil 11 eingefahren.

Üblicherweise erfolgt dieses Absenken und Anheben des Rahmens 10 gegenüber den beiden Rädern 20, 30 gleichzeitig und vollständig, d.h. bei einer durchgängig horizontalen Ausrichtung des Rahmens 10, wie für den Stand der Technik beschrieben. Hierdurch können eine vollständig abgesenkte und eine vollständig angehobene Position des Rahmens 10 gegenüber dem Untergrund eingenommen werden.

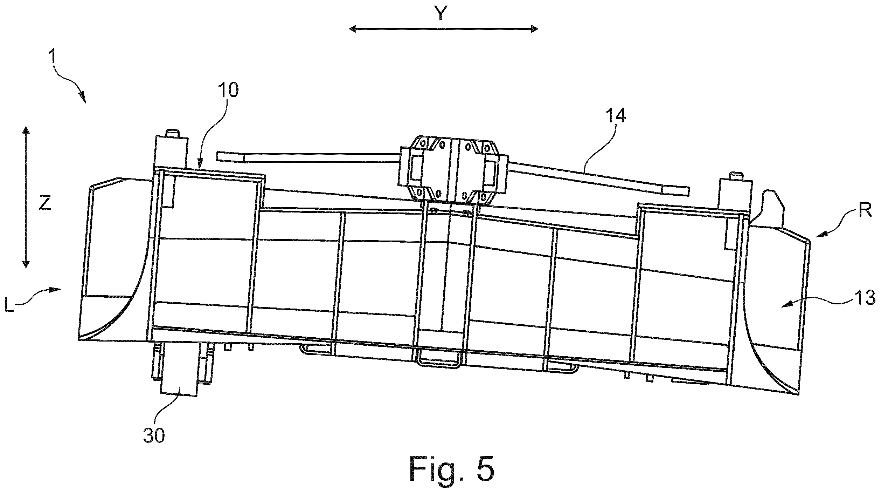

Erfindungsgemäß sind die beiden Räder 20, 30 jedoch ausgebildet, getrennt und unabhängig voneinander angehoben und abgesenkt zu werden. Hierzu weist jedes Rad 20, 30 einen elektrischen Antrieb 21, 31 auf, der jeweils über einen Exzenter 22, 32 mit dem jeweiligen Rad 20, 30 verbunden ist. Auf diese Weise kann beispielsweise das erste, rechte Rad 20 durch Betätigung seines Antriebs 21 mittels dessen Exzenters 22 eingefahren werden, während das zweite, linke Rad 30 vollständig ausgefahren bleiben kann, vgl. z.B. Fig. 5. Alternativ könnte gleichzeitig das zweite, linke Rad 30 teilweise eingefahren werden, um ein Absenken des Rahmens mit einer geringeren Neigung zu erreichen.

In jedem Fall senkt sich hierdurch die rechte Seite R des Rahmens 10 beim Einfahren des ersten, rechten Rades 20 auf den Untergrund (nicht dargestellt) ab, bis das erste, rechte Rad 20 vollständig im Rahmen 10 eingefahren ist und die rechte, äußere Kante des Rahmens 10 auf dem Untergrund aufliegt. Hierdurch wird eine schiefe Ebene des Routenzuganhängers 1 erzeugt, von der ein Logistikelement 6 aufgrund seiner Gewichtskraft, welche zu einer selbsttätigen Bewegung nach rechts von den beiden Logistikelementaufnahmen 12, 13 herunter führt, viel einfacher von einem Benutzer entladen werden kann als in einem vollständig horizontal abgesenkten Zustand.

Um diese erfindungsgemäße Funktion auszuführen, ist auf beiden Seiten R, L des Rahmens 10 jeweils etwa in der Längsrichtung X und in der Höhe Z mittig ein Absenkbedienelement 5 in Form eines Fußtasters 5 angeordnet. Wird der Fußtaster 5 von dem Benutzer mit dem Fuß durch Berührung z.B. einmalig betätigt, erfolgt ein rein einseitiges vollständiges Absenken der entsprechenden Seite R, L des Rahmens 10, so dass das Logistikelement 6 zu dem Benutzer hin einfacher entladen werden kann. Hierdurch kann erreicht werden, dass der Benutzer darauf vorbereitet ist, dass ihm das Logistikelement 6 entgegenkommen kann und er das Logistikelement 6 dabei führen kann. Wird der Fußtaster 5 von dem Benutzer mit dem Fuß durch Berührung z.B. zweimalig betätigt, erfolgt ein vollständiges Absenken der entsprechenden Seite R, L des Rahmens 10 bei gleichzeitig teilweisem Absenken der gegenüberliegenden Seite L, R, so dass ebenfalls eine Neigung des Rahmens 10 zum Benutzer hin eingenommen wird, jedoch mit einer geringeren Neigung als zuvor beschrieben. Dies kann vorteilhaft sein, um ein mit einem hohen Gewicht beladenes Logistikelement 6 geringer zu beschleunigen und hierdurch durch den Benutzer einfacher und mit weniger Kraft handhaben zu können.

Hat ein Benutzer den Fußtaster 5 betätigt und das Logistikelement 6 von der schiefen Ebene entnommen, so wird, um eine vorbestimmte Zeitdauer verzöger,t auch das zweite, linke Rad 30 eingefahren und damit die linke Seite L des Routenzuganhängers 1 auf den Untergrund abgesenkt, vgl. Fig. 6. Hierdurch kann ein vollkommen horizontal abgesenkter Zustand des Routenzuganhängers 1 erreicht werden, welcher wie üblich beladen werden kann.

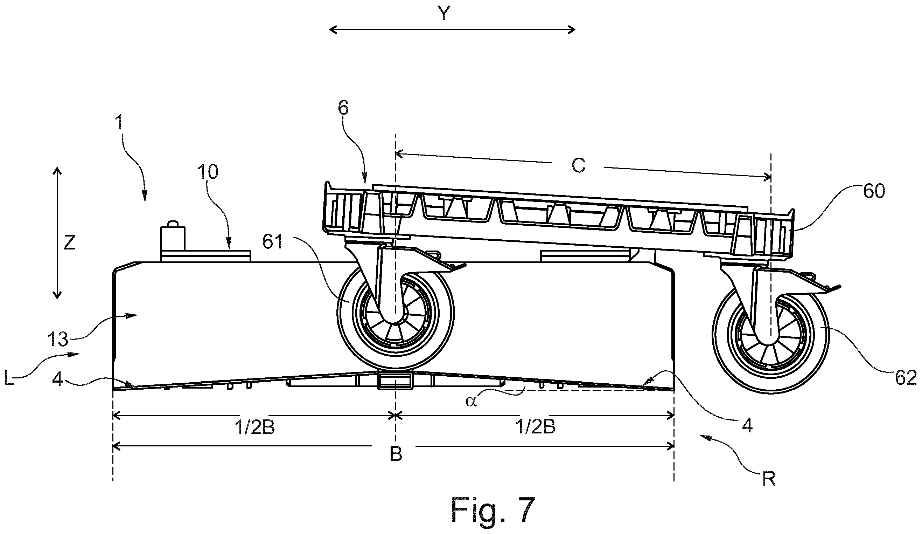

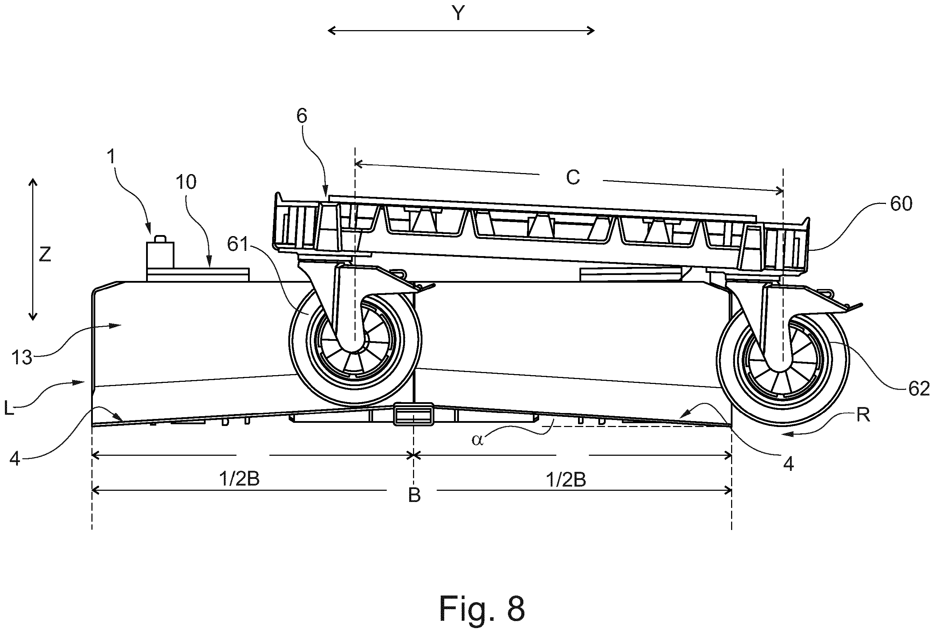

Eine derartige Beladungssituation zeigen die Fig. 7 und 8. Auf den vollkommen horizontal abgesenkten Routenzuganhänger 1 gemäß der Darstellung der Fig. 6 wird nun von rechts ein Logistikelement 6 in Form eines Trolleys 6 mit einem vorderen Laufrollenpaar auf die erste, vordere Logistikelementaufnahme 12 (nicht dargestellt) und mit einem hinteren Laufrollenpaar 61, 62 auf die zweite, hintere Logistikelementaufnahme 13 aufgeschoben. Die Laufrollenpaare des Trolleys 6 sind mit einem Gestell 60 des Trolleys 6 verbunden.

Wie für die zweite, hintere Logistikelementaufnahme 13 in der Fig. 7 dargestellt, wird dabei zuerst eine erste Laufrolle 61 des hinteren Laufrollenpaares 61, 62 in die zweite, hintere Logistikelementaufnahme 13 eingeschoben. Dabei ist ein gewisser Höhenunterschied gegenüber dem Untergrund zu überwinden, der durch die zweite, hintere Logistikelementaufnahme 13 bedingt ist. Erfindungsgemäß sind die beiden Logistikelementaufnahmen 12, 13 dabei derart ausgebildet, dass sie jeweils ein Paar von Schrägflächen 4 aufweisen, welche von der jeweiligen Seite R, L bis zur Mitte der jeweiligen Logistikelementaufnahme 12, 13 als höchstem Punkt eine Steigung mit einem Winkel α von ca. 3° aufweisen. Hierdurch weisen die beiden Logistikelementaufnahmen 12, 13 jeweils eine dreieckig förmige Erhöhung in der Mitte auf, welche von den Seiten R, L jeweils um die halbe Breite B der Logistikelementaufnahme 12, 13 beabstandet ist. Dabei ist die halbe Breite B der Logistikelementaufnahme 12, 13 etwa 1 cm bis 5 cm kürzer ausgebildet als der Achsabstand C der beiden Laufrollen 61, 62 in der Querrichtung Y zueinander. Mit anderen Worten ist der Radstand C der Laufrollen 61, 62 des Trolleys 6 etwa 1 cm bis 5 cm länger als die halbe Breite B der Logistikelementaufnahme 12, 13.

Dies hat den Effekt, dass der Trolley 6 zwar beim Einschieben vom Benutzer zuerst über die halbe Breite B die Schrägfläche 4 gegen eine Steigung von 3° hochgeschoben werden muss. Überwindet die erste Laufrolle 61 jedoch den höchsten Punkt des Paares von Schrägflächen 4 der jeweiligen Logistikelementaufnahme 12, 13, so setzt für die erste Laufrolle 61 eine Abwärtsbewegung mit einer Steigung von 3° auf der anderen Schrägfläche 4 des Paares von Schrägflächen 4 ein, welche teilweise die zweite Laufrolle 62 die erste Schrägfläche 4 hinaufziehen kann, so dass für diesen Teilabschnitt des Einschiebens der Benutzer zumindest teilweise entlastet wird. Somit kann auch auf diese Weise dem Benutzer die Arbeit erleichtert werden.

### BEZUGSZEICHENLISTE (Teil der Beschreibung)

- A: Bewegungsrichtung; Fahrtrichtung
- α: Winkel der Schrägflächen 4 der Logistikelementaufnahmen 12, 13
- B: Breite der Logistikelementaufnahmen 12, 13
- C: Achsabstand der Laufrollen 61, 62 des Logistikelements 6
- L: linke Seite des Routenzuganhängers 10
- R: rechte Seite des Routenzuganhängers 10
- X: Längsrichtung
- Y: Querrichtung
- Z: vertikale Richtung; Höhe

- 1: Routenzuganhänger
- 10: Rahmen des Routenzuganhängers 1; Gestell des Routenzuganhängers 1
- 11: mittlerer Rahmenteil
- 12: erste, vordere Logistikelementaufnahme
- 13: zweite, hintere Logistikelementaufnahme
- 14: erstes, vorderes Kopplungselement; erste, vordere Scherenkopplung
- 15: zweites, hinteres Kopplungselement; zweite, hintere Scherenkopplung
- 16: Abdeckung

- 20: erstes, rechtes Rad
- 21: (elektrischer) Antrieb des ersten, rechten Rades 20
- 22: Exzenter des ersten, rechten Rades 20

- 30: zweites, linkes Rad
- 31: (elektrischer) Antrieb des zweiten, linken Rades 30
- 32: Exzenter des zweiten, linken Rades 30

- 4: Schrägflächen der Logistikelementaufnahmen 12, 13
- 5: Absenkbedienelement; Taster; Fußtaster

- 6: Logistikelement; Trolley
- 60: Gestell des Logistikelements 6
- 61: erste Laufrolle
- 62: zweite Laufrolle

## Patentansprüche

1. Routenzuganhänger (1), mit
einem Rahmen (10) zur Aufnahme eines Logistikelements (6),
**dadurch gekennzeichnet, dass**
der Rahmen (10) ausgebildet ist, auf wenigstens einer Seite (R; L) in der vertikalen Richtung (Z) unabhängig von der in Querrichtung (Y) gegenüberliegenden Seite (L; R) abgesenkt und angehoben zu werden.

2. Routenzuganhänger (1) nach Anspruch 1, **gekennzeichnet durch** wenigstens ein erstes Rad (20), welches auf einer Seite (R) angeordnet und ausgebildet ist, in der vertikalen Richtung (Z) unabhängig von einem auf der in Querrichtung (Y) gegenüberliegenden Seite (L) angeordnetem zweiten Rad (30) abgesenkt und angehoben zu werden.

3. Routenzuganhänger (1) nach Anspruch 2, **dadurch gekennzeichnet, dass** ferner wenigstens das zweite Rad (30) ausgebildet ist, in der vertikalen Richtung (Z) unabhängig von dem ersten Rad (20) abgesenkt und angehoben zu werden.

4. Routenzuganhänger (1) nach Anspruch 2 oder 3, **dadurch gekennzeichnet, dass** die beiden Räder (20, 30) eine gemeinsame Achse (D) oder zwei unabhängige Achsen (D) aufweisen.

5. Routenzuganhänger (1) nach einem der Ansprüche 2 bis 4, **dadurch gekennzeichnet, dass**
wenigstens das erste Rad (20), vorzugsweise ferner das zweite Rad (30), (jeweils) mittels eines Exzenters (22; 32) und eines Antriebs (21; 31), vorzugsweise (jeweils) mittels eines elektrischen Antriebs (21; 31), einzeln abgesenkt und angehoben werden kann.

6. Routenzuganhänger (1) nach einem der vorherigen Ansprüche, **dadurch gekennzeichnet, dass**
der Rahmen (10) ausgebildet ist, zuerst eine Seite (R; L) in der vertikalen Richtung (Z) abzusenken und danach, um einen vorbestimmten Zeitabstand versetzt, selbsttätig die in Querrichtung (Y) gegenüberliegende Seite (L; R) abzusenken.

7. Routenzuganhänger (1) nach einem der vorherigen Ansprüche, **dadurch gekennzeichnet, dass**
der Rahmen (10) ausgebildet ist, beide Seiten (R, L) in der vertikalen Richtung (Z) gleichzeitig oder zeitlich versetzt derart abzusenken, so dass beide Seiten (R, L) gegenüber einer vorherigen Höhe abgesenkt werden, eine Seite (R; L) jedoch stärker abgesenkt wird als die in Querrichtung (Y) gegenüberliegende Seite (L; R).

8. Routenzuganhänger (1) nach einem der vorherigen Ansprüche, **gekennzeichnet durch** wenigstens ein Absenkbedienelement (5), vorzugsweise jeweils wenigstens ein Absenkbedienelement (5) für jede Seite (R; L), welches ausgebildet ist, bei Betätigung durch einen Benutzer ein Absenken einer Seite (R; L) des Rahmens (10), vorzugsweise ein Absenken der dem Benutzer zugewandten Seite (R; L) des Rahmens (10), auszulösen.

9. Routenzuganhänger (1) nach Anspruch 8, **dadurch gekennzeichnet, dass** das Absenkbedienelement (5) ein Taster (5), insbesondere ein Fußtaster (5), ist.

10. Routenzuganhänger (1) nach einem der vorherigen Ansprüche, **dadurch gekennzeichnet, dass**
der Rahmen (10), insbesondere als Überladerahmen (10) oder als Portalrahmen (10), ausgebildet ist, von beiden Seiten (R, L) in Querrichtung (Y) be- und entladen zu werden.

11. Routenzuganhänger (1) nach einem der vorherigen Ansprüche, **dadurch gekennzeichnet, dass**
der Rahmen (10) zueinander in Längsrichtung (X) beabstandet eine erste Logistikelementaufnahme (12) und eine zweite Logistikelementaufnahme (13) aufweist, welche ausgebildet sind, jeweils wenigstens eine Rolle (61, 62) des Logistikelements (6) aufzunehmen.

12. Routenzuganhänger (1) nach Anspruch 11, **dadurch gekennzeichnet, dass** wenigstens eine Logistikelementaufnahme (12; 13), vorzugsweise beide Logistikelementaufnahmen (12, 13), ein Paar von Schrägflächen (4) aufweist, welches sich im Wesentlichen in der Querrichtung (Y) erstreckt und in der vertikalen Richtung (Z) dreieckig erhöht ausgebildet ist.

13. Routenzuganhänger (1) nach Anspruch 12, **dadurch gekennzeichnet, dass** wenigstens ein Paar von Schrägflächen (4), vorzugsweise beide Paare von Schrägflächen (4), je Schrägfläche (4) gegenüber der Querrichtung (Y) eine Steigung von einem Winkel (α) aufweist, der zwischen ca. 1° und ca. 5°, vorzugsweise zwischen ca. 2° und ca. 4°, besonders bevorzugt ca. 3°, beträgt.

14. Routenzuganhänger (1) nach Anspruch 12 oder 13, **dadurch gekennzeichnet, dass** sich wenigstens die Schrägflächen (4) wenigstens eines Paares von Schrägflächen (4), vorzugsweise die Schrägflächen (4) beider Paare von Schrägflächen (4), in der Querrichtung (Y) in der halben Breite (B) der Logistikelementaufnahme (12; 13) erstrecken.

15. Routenzuganhänger (1) nach einem der Ansprüche 12 bis 14, **dadurch gekennzeichnet, dass**
sich die einzelnen Schrägflächen (4) wenigstens eines Paares von Schrägflächen (4), vorzugsweise beider Paare von Schrägflächen (4), in der Querrichtung (Y) etwa 1 cm bis 5 cm kürzer erstrecken als der Achsabstand (C) zweier in der Querrichtung (Y) beabstandeter Laufrollen (61, 62) des Logistikelements (6) beträgt.

## Claims

1. Tugger train trailer (1), comprising a frame (10) for receiving a logistics element (6), **characterized in that** the frame (10) is designed to be lowered and raised in the vertical direction (Z) on at least one side (R; L) independently of the side (L; R) that is opposite in the transverse direction (Y).

2. Tugger train trailer (1) according to claim 1, **characterized by** at least one first wheel (20) which is arranged on one side (R) and designed to be lowered and raised in the vertical direction (Z) independently of a second wheel (30) arranged on the side (L) that is opposite in the transverse direction (Y).

3. Tugger train trailer (1) according to claim 2, **characterized in that** at least the second wheel (30) is also designed to be lowered and raised in the vertical direction (Z) independently of the first wheel (20).

4. Tugger train trailer (1) according to either claim 2 or claim 3, **characterized in that** the two wheels (20, 30) have a common axle (D) or two independent axles (D).

5. Tugger train trailer (1) according to any of claims 2 to 4, **characterized in that** at least the first wheel (20), and preferably also the second wheel (30), can be individually lowered and raised (in each case) by means of an eccentric cam (22; 32) and a drive (21; 31), preferably (in each case) by means of an electric drive (21; 31).

6. Tugger train trailer (1) according to any of the preceding claims, **characterized in that** the frame (10) is designed to first lower one side (R; L) in the vertical direction (Z) and then, offset by a predetermined time interval, automatically lower the side (L; R) that is opposite in the transverse direction (Y).

7. Tugger train trailer (1) according to any of the preceding claims, **characterized in that** the frame (10) is designed to lower both sides (R, L) in the vertical direction (Z) simultaneously or offset in time such that both sides (R, L) are lowered compared to a previous height, but one side (R; L) is lowered more than the side (L; R) that is opposite in the transverse direction (Y).

8. Tugger train trailer (1) according to any of the preceding claims, **characterized by** at least one lowering control element (5), preferably at least one lowering control element (5) for each side (R; L), which is designed to trigger a lowering of one side (R; L) of the frame (10), preferably a lowering of the side (R; L) of the frame (10) facing the user, when actuated by a user.

9. Tugger train trailer (1) according to claim 8, **characterized in that** the lowering control element (5) is a button (5), in particular a foot button (5).

10. Tugger train trailer (1) according to any of the preceding claims, **characterized in that** the frame (10) is designed, in particular as an overload frame (10) or as a portal frame (10), to be loaded and unloaded from both sides (R, L) in the transverse direction (Y).

11. Tugger train trailer (1) according to any of the preceding claims, **characterized in that** the frame (10) has a first logistics element receptacle (12) and a second logistics element receptacle (13) spaced apart from one another in the longitudinal direction (X), which receptacles are each designed to receive at least one roller (61, 62) of the logistics element (6).

12. Tugger train trailer (1) according to claim 11, **characterized in that** at least one logistics element receptacle (12; 13), preferably both logistics element receptacles (12, 13), has/have a pair of inclined surfaces (4) which extend substantially in the transverse direction (Y) and are raised in a triangular shape in the vertical direction (Z).

13. Tugger train trailer (1) according to claim 12, **characterized in that** at least one pair of inclined surfaces (4), preferably both pairs of inclined surfaces (4), has/have, per inclined surface (4), a slope of an angle (α) with respect to the transverse direction (Y), which angle is between approximately 1° and approximately 5°, preferably between approximately 2° and approximately 4°, particularly preferably approximately 3°.

14. Tugger train trailer (1) according to either claim 12 or claim 13, **characterized in that** at least the inclined surfaces (4) of at least one pair of inclined surfaces (4), preferably the inclined surfaces (4) of both pairs of inclined surfaces (4), extend in the transverse direction (Y) in half the width (B) of the logistics element receptacle (12; 13).

15. Tugger train trailer (1) according to any of claims 12 to 14, **characterized in that** the individual inclined surfaces (4) of at least one pair of inclined surfaces (4), preferably of both pairs of inclined surfaces (4), extend approximately 1 cm to 5 cm shorter in the transverse direction (Y) than the center distance (C) of the two running rollers (61, 62) of the logistics element (6) that are spaced apart in the transverse direction (Y).

## Revendications

1. Remorque pour chariot tracteur (1), comportant un châssis (10) permettant de recevoir un élément logistique (6), **caractérisée en ce que** le châssis (10) est formé de manière à être abaissé et relevé sur au moins un côté (R ; L) dans la direction verticale (Z) indépendamment du côté (L ; R) opposé dans la direction transversale (Y).

2. Remorque pour chariot tracteur (1) selon la revendication 1, **caractérisée par** au moins une première roue (20), laquelle est disposée et formée sur un côté (R) de manière à être abaissée et relevée dans la direction verticale (Z) indépendamment d'une seconde roue (30) disposée sur un côté (L) opposé dans la direction transversale (Y).

3. Remorque pour chariot tracteur (1) selon la revendication 2, **caractérisée en ce qu'**au moins la seconde roue (30) est en outre conçue pour être abaissée et relevée dans la direction verticale (Z) indépendamment de la première roue (20).

4. Remorque pour chariot tracteur (1) selon la revendication 2 ou 3, **caractérisée en ce que** les deux roues (20, 30) présentent un essieu (D) commun ou deux essieux (D) indépendants.

5. Remorque pour chariot tracteur (1) selon l'une des revendications 2 à 4, **caractérisée en ce qu'**au moins la première roue (20), de préférence en outre la seconde roue (30), peut être individuellement abaissée et relevée (respectivement) au moyen d'un excentrique (22 ; 32) et d'un entraînement (21 ; 31), de préférence (respectivement) au moyen d'un entraînement électrique (21 ; 31).

6. Remorque pour chariot tracteur (1) selon l'une des revendications précédentes, **caractérisée en ce que** le châssis (10) est conçu pour d'abord abaisser un côté (R ; L) dans la direction verticale (Z), et ensuite, avec un décalage d'un intervalle de temps prédéterminé, abaisser automatiquement le côté (L ; R) opposé dans la direction transversale (Y).

7. Remorque pour chariot tracteur (1) selon l'une des revendications précédentes, **caractérisée en ce que** le châssis (10) est conçu pour abaisser les deux côtés (R, L) dans la direction verticale (Z) simultanément ou avec un décalage temporel, de telle sorte que les deux côtés (R, L) sont abaissés par rapport à une hauteur précédente, mais un côté (R ; L) est plus abaissé que le côté (L ; R) opposé dans la direction transversale (Y).

8. Remorque pour chariot tracteur (1) selon l'une des revendications précédentes, **caractérisée par** au moins un élément de commande d'abaissement (5), de préférence respectivement au moins un élément de commande d'abaissement (5) pour chaque côté (R ; L), lequel est conçu pour déclencher un abaissement d'un côté (R; L) du cadre (10), de préférence un abaissement du côté (R ; L) du cadre (10) faisant face à l'utilisateur, lorsqu'il est actionné par un utilisateur.

9. Remorque pour chariot tracteur (1) selon la revendication 8, **caractérisée en ce que** l'élément de commande d'abaissement (5) est un bouton (5), en particulier une pédale (5).

10. Remorque pour chariot tracteur (1) selon l'une des revendications précédentes, **caractérisée en ce que** le châssis (10) est formé, en particulier en tant que châssis de surcharge (10) ou en tant que portique (10), de manière à être chargé et déchargé des deux côtés (R, L) dans la direction transversale (Y).

11. Remorque pour chariot tracteur (1) selon l'une des revendications précédentes, **caractérisée en ce que** le châssis (10) présente un premier réceptacle d'élément logistique (12) et un second réceptacle d'élément logistique (13) espacés l'un de l'autre dans la direction longitudinale, lesquels sont formés de manière à recevoir respectivement au moins un galet (61, 62) de l'élément logistique (6).

12. Remorque pour chariot tracteur (1) selon la revendication 11, **caractérisée en ce qu'**au moins un réceptacle d'élément logistique (12 ; 13), de préférence les deux réceptacles d'élément logistique (12, 13), présente une paire de surfaces inclinées (4) qui s'étendent sensiblement dans la direction transversale (Y) et sont surélevées de manière triangulaire dans la direction verticale (Z).

13. Remorque pour chariot tracteur (1) selon la revendication 12, **caractérisée en ce qu'**au moins une paire de surfaces inclinées (4), de préférence les deux paires de surfaces inclinées (4), présentent une pente d'un angle (α) par surface inclinée (4) par rapport à la direction transversale (Y), lequel angle est compris entre environ 1° et environ 5°, de préférence entre environ 2° et environ 4°, de manière particulièrement préférée est d'environ 3°.

14. Remorque pour chariot tracteur (1) selon la revendication 12 ou 13, **caractérisée en ce qu'**au moins les surfaces inclinées (4) d'au moins une paire de surfaces inclinées (4), de préférence les surfaces inclinées (4) des deux paires de surfaces inclinées (4), s'étendent sur la moitié de la largeur (B) du réceptacle d'élément logistique (12; 13) dans la direction transversale (Y).

15. Remorque pour chariot tracteur (1) selon l'une des revendications 12 à 14, **caractérisée en ce que** les surfaces inclinées (4) individuelles d'au moins une paire de surfaces inclinées (4), de préférence des deux paires de surfaces inclinées (4), s'étendent moins dans la direction transversale (Y) que l'entraxe (C) de deux galets de roulement (61, 62) de l'élément logistique (6) espacés dans la direction transversale (Y) d'environ 1 cm jusqu'à 5 cm.
